(19) Europäisches Patentamt European Patent Office Office européen des brevets

(11) **EP 4 530 618 A1**

(12) **DEMANDE DE BREVET EUROPEEN**

(43) Date de publication:
02.04.2025 Bulletin 2025/14

(21) Numéro de dépôt: 24203153.2

(22) Date de dépôt: 27.09.2024

(51) Classification Internationale des Brevets (IPC):
*G01N 25/18* (2006.01) *G01N 30/66* (2006.01)

(52) Classification Coopérative des Brevets (CPC):
**G01N 25/18; G01N 30/66**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: 27.09.2023 FR 2310284

(71) Demandeur: **Commissariat à l'Energie Atomique et aux Energies Alternatives 75015 Paris (FR)**

(72) Inventeurs:
• **THOMAS, Yoham**
38054 GRENOBLE CEDEX 09 (FR)
• **TEULLE, Alexandre**
38054 GRENOBLE CEDEX 09 (FR)

(74) Mandataire: **Cabinet Nony 11 rue Saint-Georges 75009 Paris (FR)**

(54) **DÉTECTEUR DE CONDUCTIVITÉ THERMIQUE COMPORTANT UN CAPTEUR RÉSISTIF INTÉGRANT DU CARBONE ADAMANTIN ET PROCÉDÉ CORRESPONDANT**

(57) Détecteur de conductivité thermique (1), notamment pour la détection et, optionnellement, la quantification d'un analyte gazeux au sein d'un gaz, le détecteur comportant un capteur résistif (2) contenant, voire consistant en, du carbone adamantin.

[Fig 3]

Fig. 3

EP 4 530 618 A1

## Description

### Domaine technique

La présente invention concerne la détection et la quantification d'un analyte gazeux au moyen d'un détecteur de conductivité thermique. Une telle détection est par exemple mise en oeuvre pour une chromatographie en phase gazeuse, notamment pour détecter une fuite de dihydrogène dans une pile à combustible.

### Etat de la technique

Un détecteur de conductivité thermique, fréquemment dénommé sous l'abréviation TCD, acronyme anglais de « Thermal Conductivity Detector », est couramment utilisé pour effectuer une chromatographie en phase gazeuse. Il comporte un capteur résistif parcouru par un courant électrique l'alimentant, qui chauffe le capteur résistif par effet Joule.

Le capteur résistif d'un détecteur de conductivité thermique est caractérisé par le fait qu'il présente une résistance électrique R qui varie avec la température T, par exemple linéairement selon la relation suivante

[math 1]

$$R = R_0(1 + \alpha T)$$

où $R_0$ est la résistance du conducteur à une température de 0 °C et $\alpha$ est le coefficient de température, exprimé en $K^{-1}$.

Le capteur résistif est immergé dans un gaz, avec lequel il échange une quantité de chaleur qu'il génère par effet Joule. Cette quantité de chaleur étant proportionnelle à la conductivité thermique du gaz, la température du capteur résistif dépend donc de la conductivité thermique du gaz. Ainsi, une variation de la composition du gaz induit une variation de la température du capteur résistif. Il en résulte une variation de la résistance électrique du capteur résistif. En mesurant cette résistance électrique, il est ainsi possible de détecter la présence d'un analyte gazeux et éventuellement d'en déterminer la concentration.

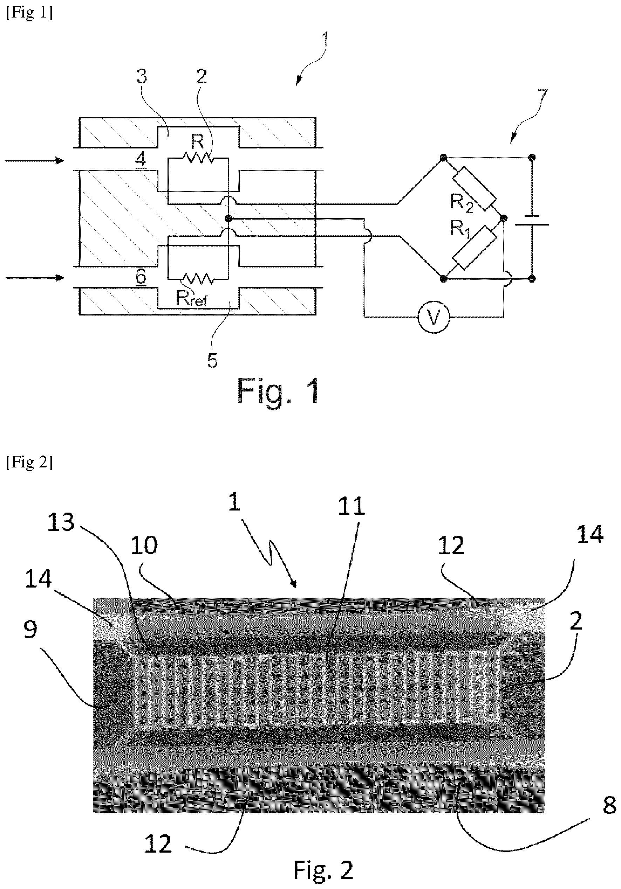

La figure 1 illustre un exemple de mise en oeuvre de détection d'un analyte gazeux avec un détecteur de conductivité thermique. Le détecteur de conductivité thermique 1 comporte un capteur résistif 2 de résistance électrique R disposé dans une chambre de mesure 3 dans laquelle le capteur résistif 2 est en contact avec un gaz à analyser 4. Il comporte en outre une résistance de référence $R_{ref}$ disposée dans une chambre de référence 5, hermétiquement séparée de la chambre de mesure 3. La résistance de référence est au contact d'un gaz de référence 6 dont la composition est connue. Le capteur résistif 2 et la résistance de référence $R_{ref}$ sont intégrés électriquement au sein d'un pont de Wheatstone 7. La valeur de la résistance électrique R du capteur résistif 2 peut ainsi être déterminée avec précision, la résistance de référence et les autres résistances $R_1$ et $R_2$ du pont de Wheatstone étant connues.

Les matériaux utilisés pour former le capteur résistif d'un détecteur de conductivité thermique sont choisis pour leur aptitude à une mise en oeuvre sur une large plage de température, leur stabilité et la linéarité de la variation de leur résistance électrique avec une variation de température. En particulier, le platine et le nichrome (alliage de nickel et de chrome) sont couramment utilisés pour former le capteur résistif.

Cependant, ces matériaux métalliques sont coûteux. En outre, dans le cadre d'une fabrication d'un micro détecteur de conductivité thermique de petite taille, typiquement inférieure à 1 cm, la mise en oeuvre de techniques de dépôt de couches minces constituées de ces matériaux métalliques, par exemple telles que celles rencontrées dans le domaine des composants en couche de la technologie CMOS (métal-oxyde-semiconducteur), peut induire des pollutions des appareils de dépôt et/ou de la surface du substrat sur lequel les couches minces sont déposées.

Or il existe un intérêt croissant pour des micro détecteurs de conductivité thermique qui présentent de nombreux avantages : un temps de réponse cours pour détecter un gaz, une faible consommation d'énergie et une utilisation dans des applications où la portabilité est requise.

Par ailleurs, les capteurs résistifs faits de nichrome ou de platine peuvent présenter des propriétés mécaniques qui se dégradent à l'usage et qui induisent une dérive de la mesure de conductivité thermique à long terme.

### Résumé de l'invention

L'invention propose un détecteur de conductivité thermique, notamment pour la détection et, optionnellement, la quantification d'un analyte gazeux au sein d'un gaz, le détecteur comportant un capteur résistif contenant, voire consistant en, du carbone adamantin.

Le détecteur de conductivité thermique peut être fabriqué aisément, le carbone étant abondant et pouvant être aisément produit sous la forme de carbone adamantin. En outre, le dépôt du carbone adamantin par des procédés de dépôt de couches minces, tels que ceux de la technologie CMOS, n'induit pas avantageusement de pollution des appareils de dépôt. La fabrication d'un micro détecteur de conductivité thermique est ainsi facilitée. En outre, sous forme d'une couche mince, le carbone adamantin conserve ses propriétés au moins jusqu'à 260 °C, ce qui permet une détection de gaz au moins jusqu'à cette température, comme cela est connu de D.R. Tallant, J.E. Parmeter, M.P. Siegal, R.L. Simpson, Diamond and Related Materials. 4 (1995) 191-199, https://doi.org/10.1016/0925-9635(94)00243-6.

Le carbone adamantin est aussi dénommé sous l'abréviation DLC, acronyme anglais de « Diamond Like Carbon », ou carbone type diamant en français.

Le carbone adamantin est constitué de carbone dont la structure se situe entre le diamant, caractérisé par une structure cristallographique éponyme et par des liaisons hybridées sp3 entre les atomes de carbone, et le graphite, présentant une structure cristallographique hexagonale et des liaisons hybridées sp2 entre les atomes de carbone. A la différence du diamant ou du graphite qui sont des formes cristallines du carbone, le carbone adamantin est amorphe car il ne présente pas d'ordre à grande distance. Il peut toutefois comporter des nanocristaux de carbone hybridés sp2 ou sp3, majoritairement présents dans sa composition.

Les propriétés ainsi que des exemples de mise en oeuvre du carbone adamantin sont décrits par exemple dans D.R. Tallant, J.E. Parmeter, M.P. Siegal, R.L. Simpson, Diamond and Related Materials. 4 (1995) 191-199, https://doi.org/10.1016/0925-9635(94)00243-6, B. Li, Y. Zhao, X. Ma, C. Li, Q. Zhang, Y. Zhao. Proc. IEEE Sensors, 2017 (2017), pp. 1-3, https://doi.org/10.1109/ICSENS.2017.8234144 et K. Luo, Y.Q. Fu, H.R. Le, J.A. Williams, S.M. Spearing, W.I. Milne, Journal of Micromechanics and Microengineering. 17 (2007) S147, https://doi.org/10.1088/0960-1317/17/7/S12.

Le carbone adamantin est par ailleurs inerte chimiquement. Il présente un faible coefficient de dilatation thermique qui permet de réduire l'endommagement des couches déposées sur un substrat par exemple en silice, nitrure de silicium, ou silicium. Il présente en outre une haute conductivité thermique permettant de dissiper rapidement la chaleur accumulée. Une longue durée de vie du détecteur de conductivité thermique est ainsi assurée.

Le détecteur de conductivité thermique comporte de préférence un pont de Wheatstone intégrant le capteur résistif, afin de mesurer la résistance électrique du capteur résistif.

Le détecteur de conductivité thermique comporte de préférence une chambre de mesure dans laquelle le capteur résistif est logé et une chambre de référence dans laquelle au moins une résistance, voire deux résistances, du pont de Wheatstone est disposée. Dans un exemple de réalisation, le pont de Wheatstone comporte quatre capteurs résistifs, deux desdits capteurs résistifs étant logés dans la chambre de mesure et deux autres desdits capteurs étant logés dans la chambre de référence.

De préférence, le détecteur de conductivité thermique comporte un substrat, le capteur résistif étant disposé sur le substrat. Le substrat est de préférence en silicium. Il peut présenter une épaisseur comprise entre 300 $\mu$m et 1200 $\mu$m.

Le détecteur de conductivité thermique peut comporter un couvercle superposé au substrat, le couvercle comportant un évidement superposé au capteur résistif. Le capteur résistif est ainsi disposé entre le couvercle et le substrat, qui définissent la chambre de mesure dans laquelle le capteur résistif est logé.

Le couvercle est de préférence en silicium. Il peut présenter une épaisseur comprise entre 300 $\mu$m et 1200 $\mu$m.

De préférence, le capteur résistif est une couche mince, qui peut présenter une épaisseur inférieure à 1 $\mu$m, voire inférieure à 250 nm.

Le capteur résistif peut être déposé, notamment à température ambiante, par une technique de dépôt sous vide, par exemple par dépôt physique en phase vapeur, notamment par pulvérisation cathodique, ou par dépôt chimique en phase vapeur.

Le carbone adamantin peut être dopé, par exemple par au moins un élément choisi parmi l'azote, le silicium, le bore, l'oxygène, le fluor, et leurs mélanges.

De préférence le substrat comporte une cavité, au moins une partie du capteur résistif étant superposée à la cavité et à distance de la cavité. Ladite partie est ainsi suspendue au-dessus de la cavité, ce qui permet au capteur résistif d'être immergé dans un flux gazeux s'écoulant dans et au-dessus de la cavité. De cette façon, les pertes thermiques avec le substrat sont limitées.

De préférence, au moins la partie du capteur résistif superposée à la cavité présente une forme d'un serpentin. Une telle forme permet d'augmenter la surface d'échange thermique entre le capteur résistif et le flux gazeux.

De préférence, le serpentin s'étend parallèlement à la face du substrat en regard du capteur résistif.

Selon une variante, la partie du capteur résistif superposée à la cavité est autoporteuse. Autrement dit, elle ne se déforme pas substantiellement sous l'effet de son propre poids et ne nécessite pas d'être portée par une structure porteuse. De préférence, la partie du capteur résistif superposée à la cavité est en regard du fond de la cavité.

Selon une autre variante, le détecteur de conductivité thermique comporte au moins une couche électriquement isolante disposée entre le substrat et le capteur résistif, la couche électriquement isolante comportant une partie autoporteuse superposée à la cavité, formant membrane, sur laquelle repose le capteur résistif. La partie du capteur résistif superposée à la cavité est ainsi suspendue au-dessus de la cavité en étant supportée par la membrane.

La membrane est de préférence ajourée, afin de faciliter l'écoulement gazeux entre la cavité et à l'opposé de la cavité par rapport à la partie suspendue du capteur résistif.

Par ailleurs, le capteur résistif peut être partiellement au contact du substrat. En particulier, le capteur résistif peut comporter des parties, disposées sur le substrat et non superposées à la cavité, qui prolongent la partie suspendue du capteur résistif afin d'alimenter électriquement ladite partie suspendue du capteur résistif.

L'invention concerne encore un procédé de détection, et optionnellement de quantification, d'un analyte gazeux au sein d'un gaz, le procédé comportant la mise en contact du gaz avec un détecteur de conductivité thermique comportant un capteur résistif contenant du carbone adamantin et le chauffage par effet Joule du capteur résistif.

Le chauffage par effet Joule du capteur résistif résulte de la génération d'un courant électrique dans le capteur résistif. Le détecteur de conductivité thermique peut être relié à une source d'alimentation électrique externe, par exemple une batterie ou un réseau de transport électrique terrestre.

De préférence, le procédé comporte la mesure de la résistance électrique du capteur résistif.

Par ailleurs, le procédé peut comporter la détermination de la concentration de l'analyte gazeux dans le gaz à partir de la mesure de la résistance électrique.

Le procédé selon l'invention peut être appliqué à la détection de différents analytes gazeux au sein de différents gaz. En particulier, l'analyte gazeux peut être du dihydrogène, le gaz comportant en outre du dioxygène et/ou de la vapeur d'eau. Le détecteur de conductivité thermique peut être disposé dans une pile à combustible, notamment afin de détecter une fuite ou une concentration excessive de dihydrogène. En variante, le gaz peut être un mélange diazote et de dioxygène, par exemple de l'air, et l'analyte peut être choisi parmi le dioxyde de carbone, la vapeur d'eau et leurs mélanges.

Selon un premier mode de mise en oeuvre du procédé, le gaz comporte un gaz de référence et l'analyte gazeux, et le procédé peut comporter une étape préliminaire de calibration du détecteur comportant la mise en contact du détecteur avec le gaz de référence. Le procédé selon le premier mode de mise en oeuvre permet de détecter l'analyte gazeux, dans la limite de détection du capteur résistif.

De préférence, le gaz consiste en le gaz de référence et l'analyte. Le procédé selon ce premier mode de mise en oeuvre permet alors, en outre, de mesurer la concentration de l'analyte gazeux au sein du gaz, aucun interférent ne perturbant alors la quantification de l'analyte. Par « interférent », on entend une espèce chimique présente dans le gaz, généralement à titre de traces, et dont la présence n'est pas souhaitée.

Selon un deuxième mode de mise en oeuvre du procédé, le gaz comporte un gaz vecteur et au moins un analyte gazeux, de préférence plusieurs analytes gazeux, et/ou au moins un interférent et le procédé peut comporter la détection et la quantification du ou des analytes gazeux avec une colonne de chromatographie équipée du détecteur selon l'invention.

De préférence, le procédé selon le deuxième mode de mise en oeuvre comporte la fourniture d'un échantillon contenant les analytes gazeux et la préconcentration de l'échantillon, afin de réduire la limite de détection des analytes par le détecteur. De préférence, le procédé comporte postérieurement à la préconcentration, la séparation des analytes dans le gaz vecteur.

Afin de quantifier chaque analyte, le procédé comporte une étape d'étalonnage avec un gaz de référence afin de déterminer l'ordre d'apparition des pics de détection de chaque analyte.

Le procédé selon le deuxième mode de mise en oeuvre permet de détecter et quantifier séparément chacun des analytes, en les distinguant notamment des interférents pouvant être contenus dans le gaz à analyser.

L'invention concerne enfin une méthode de fabrication d'un détecteur de conductivité thermique selon l'invention, la méthode comportant les étapes successives suivantes :

a) fourniture d'un substrat recouvert d'une couche électriquement isolante recouvrant au moins partiellement le substrat,

b) dépôt d'une couche en carbone adamantin au moins en partie sur la couche électriquement isolante, et

c) attaque sélective d'une partie de l'ensemble formé à l'étape b) de manière à former une cavité dans le substrat avec la partie de la couche électriquement isolante superposée à la cavité qui est distante de la cavité.

La méthode peut comporter en outre le dépôt de la couche en carbone adamantin au contact du substrat et l'attaque sélective du substrat au moins sous une partie de la couche en carbone adamantin en contact avec le substrat.

**Brève description des figures**

L'invention pourra être mieux comprise à la lecture de la description détaillé qui va suivre et des exemples non limitatifs de l'invention illustrés par le dessin annexé, dans lequel :

[Fig. 1] représente schématiquement un exemple de détecteur de conductivité thermique selon l'art antérieur,

[Fig. 2] est une photographie d'un exemple de détecteur de conductivité thermique,

[Fig. 3] est une représentation schématique d'un exemple de détecteur de conductivité thermique selon l'invention,

[Fig. 4] et [Fig. 5] sont des représentations schématiques, en coupe transversale, de deux autres exemples de détecteur de conductivité thermique selon l'invention, et

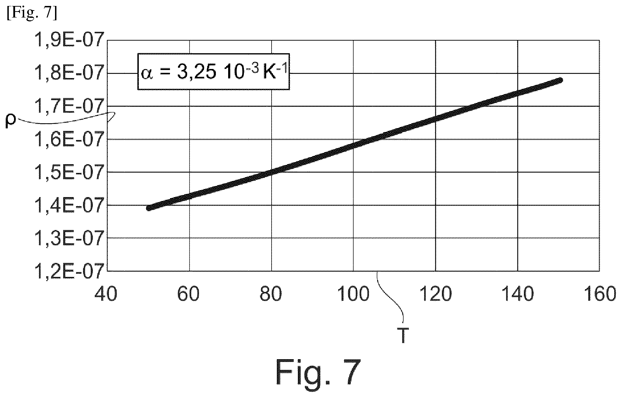

[Fig. 6] et [Fig. 7] sont des courbes expérimentales illustrant l'évolution de la résistivité électrique $\rho$, exprimée en $\Omega.m$ d'une couche de carbone adamantin et d'une couche de platine respectivement, en fonction de la température T, exprimée en °C.

Les proportions des différents éléments constituant les détecteurs illustrés sur les figures n'ont pas nécessairement été représentée à l'échelle.

## Description détaillée

La figure 2 est une vue de dessus d'un détecteur de conductivité thermique 1 selon l'invention. Le détecteur de conductivité thermique 1 comporte un substrat 8 en silicium dans lequel une rainure rectiligne est formée qui définit une cavité 9. Il comporte en outre une couche électriquement isolante 10 comportant une membrane 11 suspendue au-dessus de la cavité 9 et qui relie de part et d'autre de la cavité deux parties 12 de la couche électriquement isolante 10 qui sont au contact du substrat 8. La membrane 11 comporte des ajours permettant le passage d'un flux gazeux à travers elle. Le détecteur de conductivité thermique 1 comporte en outre un capteur résistif 2 porté par et au contact de la couche électriquement isolante 10. Le capteur résistif 2 comporte une partie 13 portée par la membrane qui présente une forme d'un serpentin et qui s'étend parallèlement à la face sur laquelle la couche électriquement isolante est disposée. Il comporte en outre des portions 14 non superposées à la cavité définissant des pistes électriquement conductrices et qui sont reliées aux deux extrémités opposées du serpentin.

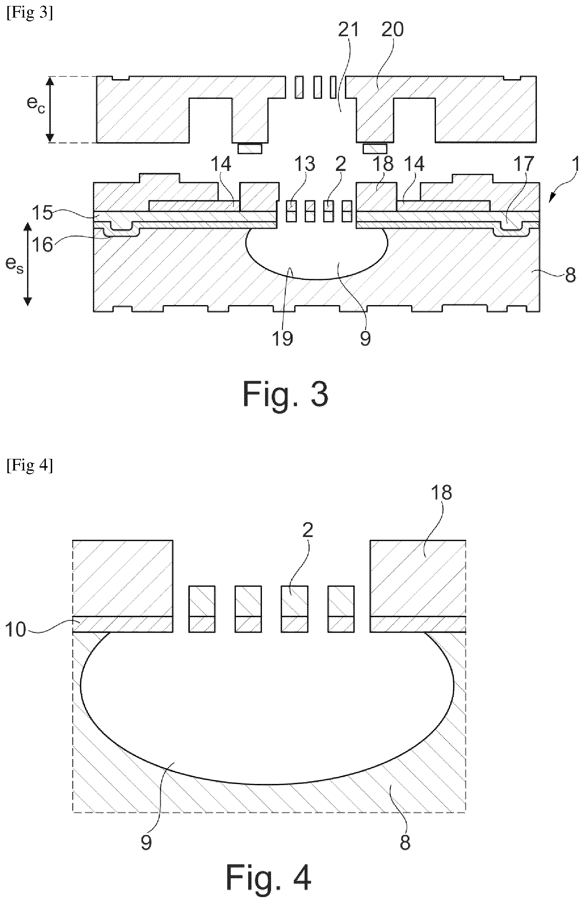

La figure 3 est une vue en coupe transversale schématique illustrant un détecteur tel que photographié sur la figure 2.

Le substrat en silicium est recouvert d'un multicouche électriquement isolant 15 qui supporte le capteur résistif 2. Le multicouche est formée d'une couche de silice 16 au contact du substrat et d'une couche de nitrure de silicium 17. Le multicouche est par ailleurs recouvert d'une couche électriquement isolante additionnelle 18, par exemple de silice. La couche électriquement isolante additionnelle peut être abrasée préalablement au dépôt du capteur résistif. Le détecteur comporte en outre un couvercle 20, par exemple en silicium, superposé au substrat. Le couvercle comporte un évidement 21, superposé à la cavité et au capteur résistif. L'évidement et la cavité définissent ainsi une chambre de mesure dans laquelle un gaz à analyser peut s'écouler. L'épaisseur du substrat $e_s$ et/ou l'épaisseur du couvercle $e_c$ sont par exemple comprises entre 300 $\mu m$ et 1200 $\mu m$.

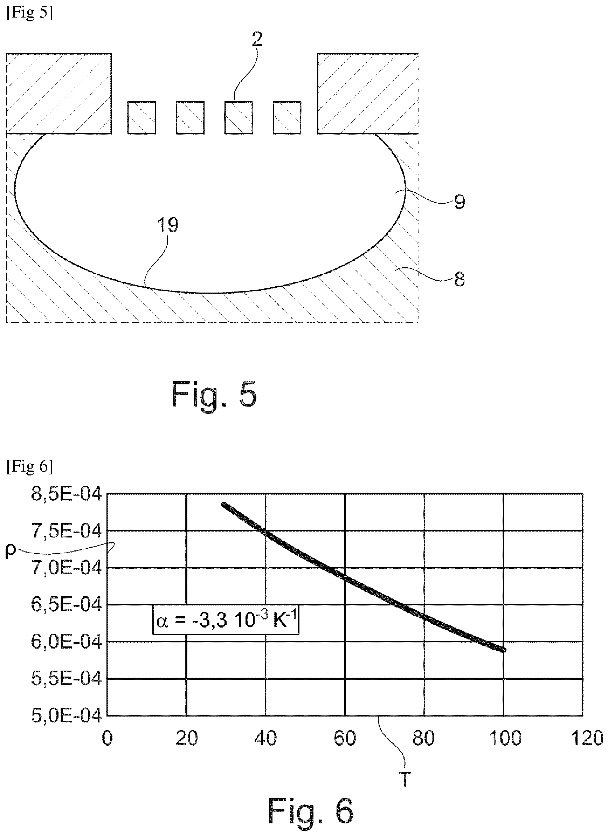

En variante, le multicouche peut être remplacé par une unique couche électriquement isolante 10, par exemple de nitrure de silicium, comme illustré sur la figure 4. La couche électriquement isolante est optionnelle, comme illustré sur la figure 5, le capteur résistif étant alors autoporteur sur la cavité. Dans cette configuration, la partie 13 du capteur résistif 2 superposée à la cavité 9 est en regard du fond 19 du fond de la cavité 9.

La cavité peut être formée, postérieurement au dépôt de la ou des couches électriquement isolantes et au dépôt du capteur résistif, par exemple par photolithographie et attaque chimique, comme cela est décrit par exemple dans l'article C. de Graff, A. Abarca Prouza, M. Ghaderi et R.F. Wolffenbuttel, Sensors and Acutators A249 (2016), 186-198, https://doi.org/10.1016/j.sna.2016.08.019.

## Exemples

Une couche de carbone adamantin dopé à l'azote a été déposée sur un substrat en verre d'une surface de 2x2 $cm^2$, par un procédé de pulvérisation cathodique magnétron à haute puissance d'impulsion HIPIMS au moyen de l'appareil DP1100 commercialisé par la société Alliance Concept. Une couche d'une épaisseur de 120 nm, mesurée par ellipsométrie, a été obtenue.

A titre comparatif, une couche de platine d'une épaisseur de 120 nm a été déposée sur un substrat en verre.

Les résistivités électriques des couches de carbone adamantin et de platine ont chacune été mesurées en configuration 4 pointes. Une tension électrique a été générée entre deux pointes, et le courant électrique circulant entre les deux autres a été mesuré. La génération de la tension et la mesure du courant ont été réalisées au moyen d'un multimètre Keithley 238. La température a été gérée via un système avec asservissement. Une plaque chauffante a permis d'augmenter la température d'un porte échantillon portant le substrat, la température étant mesurée via un thermocouple. Le refroidissement était passif.

Comme cela est observé sur la figure 6, la résistivité électrique de la couche de carbone adamantin décroit de manière sensiblement linéaire sur une plage de température comprise entre 30 °C et 100 °C, selon un coefficient de

température $\alpha$ négatif et égal à $-3,3 \times 10^{-3}$ K$^{-1}$. Au contraire, la couche de platine est caractérisée par une résistivité qui augmente linéairement avec la température entre 50 °C et 150 °C selon un coefficient de température $\alpha$ positif et égal à $3,5 \times 10^{-3}$ K$^{-1}$. Des observations similaires sont connues pour le nichrome, comme cela est connu par exemple de l'ouvrage de D.C. Giancoli, Physics, 4th Edition, Prentice Hall, 1995.

Bien que les coefficients de température du platine et du carbone adamantin soient proches en valeur absolue, la résistivité électrique du carbone adamantin est de plus de 1000 fois plus élevée pour une même température. Avantageusement, cela améliore la précision de la mesure de la résistance électrique du capteur résistif lors d'une mesure de résistance à 2 fils.

Le faible coefficient de dilatation thermique du carbone adamantin et sa résistivité électrique élevée rendent donc ce matériau particulièrement bien adapté à la formation d'un détecteur de conductivité thermique, notamment tel qu'illustré sur la figure 5, la faible dilatation thermique garantissant une bonne tenue mécanique du capteur résistif sur le substrat en usage, suite à la répétition du chauffage par effet Joule du capteur et à son refroidissement.

Bien entendu, l'invention n'est pas limitée aux modes de mise en oeuvre et applications décrites à titre non limitatif et illustratif. Par exemple, les paramètres de dépôt de la couche de carbone adamantin peuvent être modifiés afin d'en faire varier la résistivité électrique en modifiant les proportions d'états d'hybridation sp2 et sp3 du carbone. Par ailleurs, outre la chromatographie en phase gazeuse, le procédé selon l'invention peut être mis en oeuvre pour détecter des fuites d'un gaz ou pour mesurer la qualité de l'air, par exemple dans un bâtiment, une automobile, etc...

**Revendications**

1. Détecteur de conductivité thermique (1), notamment pour la détection et, optionnellement, la quantification d'un analyte gazeux au sein d'un gaz, le détecteur comportant un capteur résistif (2) contenant, voire consistant en, du carbone adamantin, le détecteur comportant un substrat, le capteur résistif étant disposé sur le substrat, le substrat comportant une cavité, au moins une partie du capteur résistif étant superposée à la cavité et à distance de la cavité.

2. Détecteur selon la revendication 1, comportant un pont de Wheatstone (7) intégrant le capteur résistif (2).

3. Détecteur selon l'une quelconque des revendications 1 et 2, le capteur résistif étant une couche mince.

4. Détecteur selon l'une quelconque des revendications précédentes, au moins la partie du capteur résistif superposée à la cavité présentant une forme d'un serpentin, s'étendant de préférence parallèlement à la face du substrat en regard du capteur.

5. Détecteur selon la revendication 4, la partie du capteur résistif superposée à la cavité étant autoporteuse.

6. Détecteur selon la revendication 4, le détecteur comportant au moins une couche électriquement isolante (10) disposée entre le substrat et le capteur résistif, la couche électriquement isolante comportant une partie autoporteuse superposée à la cavité, formant membrane (11), sur laquelle repose le capteur résistif.

7. Détecteur selon la revendication précédente, la membrane étant ajourée.

8. Détecteur selon l'une quelconque des revendications précédentes, le capteur résistif étant partiellement au contact du substrat.

9. Procédé de détection et, optionnellement, de quantification d'un analyte gazeux au sein d'un gaz, le procédé comportant la mise en contact du gaz avec le détecteur de conductivité thermique (1) selon l'une quelconque des revendications précédentes et le chauffage par effet Joule du capteur résistif.

10. Procédé selon la revendication 9, comportant la mesure de la résistance électrique (R) du capteur résistif.

11. Procédé selon la revendication 10, comportant la détermination de la concentration de l'analyte gazeux dans le gaz à partir de la mesure de la résistance électrique.

12. Procédé selon l'une quelconque des revendications 9 à 11, l'analyte gazeux étant du dihydrogène, le mélange gazeux comportant en outre du dioxygène et/ou de la vapeur d'eau.

13. Méthode de fabrication d'un détecteur de conductivité thermique selon l'une quelconque des revendications 1 à 8, la

# EP 4 530 618 A1

méthode comportant les étapes successives suivantes :

a) fourniture d'un substrat comportant un support et au moins une couche électriquement isolante disposée sur le support,

b) dépôt d'une couche en carbone adamantin sur la couche électriquement isolante, et

c) attaque sélective d'une partie de l'ensemble formé à l'étape b) de manière à former une cavité dans le support avec la partie de la couche électriquement isolante superposée à la cavité qui est distante de la cavité.

[Fig 1]

Fig. 1

[Fig 2]

Fig. 2

[Fig 3]

Fig. 3

[Fig 4]

Fig. 4

[Fig 5]

Fig. 5

[Fig 6]

$\alpha = -3{,}3 \ 10^{-3} \ K^{-1}$

Fig. 6

[Fig. 7]

Fig. 7

**RAPPORT DE RECHERCHE EUROPEENNE**

Numéro de la demande

EP 24 20 3153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2020/088697 A1 (NAKAMA YUJI [JP]) 19 mars 2020 (2020-03-19) * alinéa [0001] * * alinéa [0059] * * alinéa [0003] * | 1-13 | INV. G01N25/18 G01N30/66 |
| Y | DENOUAL M ET AL: "Microfabricated test structures for thermal gas sensor", 2014 INTERNATIONAL CONFERENCE ON MICROELECTRONIC TEST STRUCTURES (ICMTS), IEEE, 28 mars 2016 (2016-03-28), pages 16-19, XP032903333, ISSN: 1071-9032, DOI: 10.1109/ICMTS.2016.7476165 ISBN: 978-1-4799-2193-5 [extrait le 2016-05-20] * figures 2,3 * * Introduction * * Partie I. A * | 1-13 | |
| A | ZYBALA RAFAL ET AL: "Application of DLC layers in 3-omega thermal conductivity method", JOURNAL OF ACHIEVEMENTS IN MATERIALS AND MANUFACTURING ENGINEERING, 21 mai 2014 (2014-05-21), XP093143320, * figures 1,2 * * alinéa [03.1] * | 10,11 | DOMAINES TECHNIQUES RECHERCHES (IPC) G01N |
| A | CN 1 317 559 C (DALIAN CHEMICAL PHYSICS INST [CN]) 23 mai 2007 (2007-05-23) * Résumé de l'invention * | 5-9 | |
| A | US 2016/103105 A1 (NAKAMA YUJI [JP] ET AL) 14 avril 2016 (2016-04-14) * le document en entier * | 1 | |

-/--

Le présent rapport a été établi pour toutes les revendications

| Lieu de la recherche | Date d'achèvement de la recherche | Examinateur |
|---|---|---|
| Munich | 21 janvier 2025 | D'Inca, Rodolphe |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
&  : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 24 20 3153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 7 185 527 B2 (AGILENT TECHNOLOGIES INC [US]) 6 mars 2007 (2007-03-06) * le document en entier * ----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 21 janvier 2025 | D'Inca, Rodolphe |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 24 20 3153

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-01-2025

| Document brevet cité au rapport de recherche | Date de publication | Membre(s) de la famille de brevet(s) | Date de publication |
|---|---|---|---|
| US 2020088697 A1 | 19-03-2020 | CN 110895269 A<br>JP 7103100 B2<br>JP 2020041989 A<br>US 2020088697 A1 | 20-03-2020<br>20-07-2022<br>19-03-2020<br>19-03-2020 |
| CN 1317559 C | 23-05-2007 | AUCUN | |
| US 2016103105 A1 | 14-04-2016 | CN 105510493 A<br>JP 6446985 B2<br>JP 2016080413 A<br>US 2016103105 A1 | 20-04-2016<br>09-01-2019<br>16-05-2016<br>14-04-2016 |
| US 7185527 B2 | 06-03-2007 | CN 1854731 A<br>US 2006236751 A1 | 01-11-2006<br>26-10-2006 |

EPO FORM P0460

Pour tout renseignement concernant cette annexe : voir Journal Officiel de l'Office européen des brevets, No.12/82

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D.R. TALLANT** ; **J.E. PARMETER** ; **M.P. SIEGAL** ; **R.L. SIMPSON**. *Diamond and Related Materials*, 1995, vol. 4, 191-199, https://doi.org/10.1016/0925-9635(94)00243-6
- **B. LI** ; **Y. ZHAO** ; **X. MA** ; **C. LI** ; **Q. ZHANG** ; **Y. ZHAO.** *Proc. IEEE Sensors*, 2017, vol. 2017, 1-3, https://doi.org/10.1109/ICSENS.2017.8234144
- **K. LUO** ; **Y.Q. FU** ; **H.R. LE** ; **J.A. WILLIAMS** ; **S.M. SPEARING** ; **W.I. MILNE**. *Journal of Micromechanics and Microengineering*, 2007, vol. 17, S147, https://doi.org/10.1088/0960-1317/17/7/S12
- **C. DE GRAFF** ; **A. ABARCA PROUZA** ; **M. GHADERI** ; **R.F. WOLFFENBUTTEL**. *Sensors and Acutators*, 2016, vol. A249, 186-198, https://doi.org/10.1016/j.sna.2016.08.019
- **D.C. GIANCOLI**. Physics. Prentice Hall, 1995